# EUROPEAN PATENT SPECIFICATION

(11) **EP 1 686 757 B1**
(45) Date of publication and mention of the grant of the patent: **24.03.2010**
(21) Application number: 06100146.7
(22) Date of filing: 09.01.2006
(51) Int. Cl.: H04L 29/06, H04L 12/22

(54) **Method for managing consumption of digital contents within a client domain and devices implementing this method**
Verfahren zur Verwaltung von digitalem Dateninhalt in einem Client Domain und Vorrichtungen dafür
Procédé pour la gestion de la consommation des contenus numériques dans un domaine de client et dispositifs pour l'implémentation du procédé

(30) Priority: 28.01.2005 FR 0550254
(43) Date of publication of application: 02.08.2006
(73) Proprietor: Thomson Licensing, 92443 Issy-les-Moulineaux Cedex (FR)
(72) Inventor: Andreaux, Jean-Pierre, 1012 SP Amsterdam (NL); Durand, Alain, 35000 Rennes (FR); Lelièvre, Sylvain, 35760 Montgermont (FR)
(74) Representative: Berthier, Karine

(56) References cited:
- EP-A- 1 045 386
- EP-A- 1 271 279
- EP-A- 1 307 050
- WO-A-03/005174
- US-A1- 2002 157 002
- US-A1- 2002 174 354
- PATENT ABSTRACTS OF JAPAN vol. 2003, no. 12, 5 December 2003 (2003-12-05) & JP 2004 303111 A (HITACHI LTD), 28 October 2004 (2004-10-28)

## Description

### FIELD OF THE INVENTION

The present invention pertains to a method for managing consumption of digital contents within a client domain containing devices for processing digital contents. The invention further relates to devices implementing this method.

### BACKGROUND OF THE INVENTION

Producers of digital contents (for example and without limitation films, documentaries, music, clips, video games, audiovisual contents, services or the like, etc.), in order to monitor the consumption of their production distributed by digital networks such as the Internet and to avoid piracy, implement methods for managing consumption rights associated with the contents granted to their clients. These methods are referred to hereinafter as DRM methods (the initials standing for "Digital Right Management").

The rights associated with a content may authorize for example the reproduction of the content for a certain number of hours and/or a certain number of times and/or the making of a certain number of copies. It is thus necessary to track the rights as and when the contents are consumed by the clients.

Means of implementation of a DRM method exist on the provider side, in the form of a software module called the provider DRM, and on the client side, in the form of a software module called the client DRM.

Often, the consumption of the contents is effected at the level of an electronic device, referred to as an access device, for example a computer, connected to a network delivering the contents, called the provider network, and this device contains one or more client DRM module(s).

It may happen that the contents are stored or consumed on other devices of the client, which are not directly connected to the provider network.

To avoid the uncontrolled propagation of contents, the transmission of these contents may be restricted to a set of contents processing devices, generally belonging to one and the same client (for example televisions, games consoles, radios, apparatus for reproducing music, decoders, etc.).

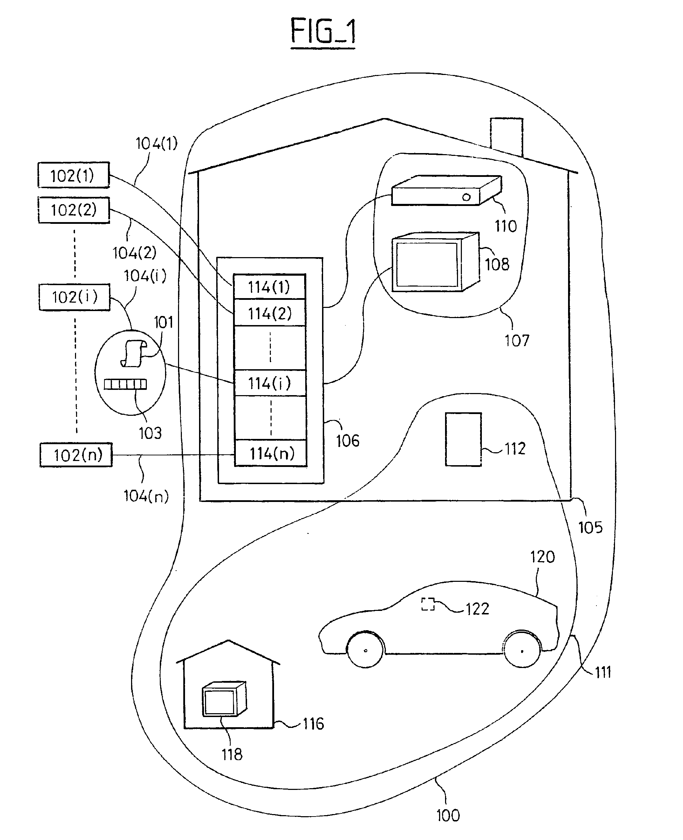

This set of devices associated with a client is called the client domain of which Figure 1 shows an example.

A provider 102 (i), 1 <=i<=n, of video and/or audio contents provides a digitized content 103 (in particular scrambled or plaintext), called the provider content 103, and rights, called the provider rights, associated with the provider content 103 and contained in a provider licence 101. This provision occurs via provider networks 104(i), 1<=i<=n, connected to an access device 106 of a client domain 100.

The networks 104(i) may in particular belong to the provider or be public, such as the Internet for example.

A DRM method exists between each provider 102(i) and the access device 106.

Methods of protecting rights have been developed to protect the provider rights in the domain 100, and check that the consumption of a content is done legitimately:
- at the level of the access device 106 or
- at the level of part of the electronic devices, called the network part 107, comprising for example a television 108 or an apparatus 110 for reproducing music, which are connected in a network to the access device 106 in particular by a coaxial cable, an optical fibre or by wireless communication systems. These devices are called linked devices.

Specifically, the checking of the consumption of contents generally requires a connection to a client DRM module 114(i) to verify the authorizations of consumption, which operation may be carried out several times during the consumption of a content.

The creation and the management of a domain 100 comprising only an access device 106 and a network part 107 have been described in the document WO 00/62505 A1 entitled "Digital Home Network and method for creating and updating such a network".

More precisely, document EP 1 253 762 A1 entitled "Process for managing a symmetric key in a communication network and devices for the implementation of this process" defines a method of management where the contents are encrypted and decrypted by virtue of a symmetric key known in particular to the device 106 and to the consumption devices of the network part 107.

A particular case of rights (rights of consumption only without rights of copying, called "view-only" rights) is dealt with in document WO 02/47356 A2 entitled "Method of secure transmission of digital data from a source to a receiver".

Furthermore, document EP 1 271 279 A2 discloses a DRM system in which a portable device contains a specific DRM module that can receive from a computer device a content and a sub-licence extracted from a licence previously received by the computer device, and then control the rendering of the content on the portable device according to the sub-license.

Document EP 1 307 050 A2 discloses another DRM system in which a portable content usage rules management device manages the utilization of a content in a user terminal to which it is connected via wireless communication based on content usage rules that are stored in the portable device.

### SUMMARY OF THE INVENTION

The invention results from the finding that the DRM methods and contents protection methods of the prior art do not currently make it possible to securely manage a content and the rights associated with this content, acquired in respect of a domain 100 through an access device 106, in contents consumption devices, called isolated devices, included in a part 111 called the isolated part of the domain 100, without introducing different complete DRM modules, each dependent on a potentially usable provider (i) into the isolated devices. The isolated devices are for example:
- a portable device 112, for example a personal audio and/or video player, making it possible to consume a content just where the client wishes; these types of isolated devices, called portable isolated devices, such as the device 112, may be connected to the access device 106 in a temporary manner so as to load contents and rights,
- a device 118 located in a site 116, different from the site 105 where there is the access device 106 (for example a television in a secondary house) or a device 122 onboard a transport vehicle 120; these types of isolated devices, called remote isolated devices such as the devices 122 and 118, may not connect up to the access device 106.

Specifically, these isolated devices cannot establish a network connection with a client DRM module 114(i) to obtain the authorizations necessary during the consumption of a content.

Now, the introduction of different complete DRM modules, dependent as they are on the provider (i), into the isolated devices entails numerous difficulties such as for example:
- numerous isolated devices have no information processing means sufficient to contain several different DRM modules(i),
- a full and definitive list of all the DRM means to be introduced would be required, and this would be a brake to competition,
- each of these technologies would have to be unalterable since they could not be updated,
- there would also be security problems given that all the secrets of these DRM modules would be gathered together in a single isolated device.

The present invention therefore aims at providing a solution to ensure that rights associated to a given content received by a client from a content provider are complied with by the client over the whole of his domain and in particular at the level of the isolated part 111.

The invention relates to a method for managing consumption of digital contents comprising the steps of:
- receiving from a provider in an access device belonging to a given domain a digital content and a first licence containing consumption rights associated with the content;
- transmitting said content to a portable device together with a second licence containing rights to consume the content from the portable device and containing authorization data in case these authorization data are necessary for the consumption of the content within the domain;
wherein said portable device authorizes or not the consumption of the content within presentation devices of the domain in accordance with the rights received in the second licence.

In one embodiment, this method further comprises a step of transmitting authorization data from the portable device to a presentation device of the domain in case these authorization data are necessary for the consumption of the content in said presentation device.

By virtue of this invention, the management of rights in the isolated part does not presuppose the introduction of different DRM modules, each dependent on a different potentially usable provider, into isolated devices so as to consume contents of various providers.

Also, a single licence coming from a provider, and associated with a content, is necessary, independently of the device of the domain used to consume the content. This licence is processed by the client DRM module.

Another advantage is the compatibility of the method of the invention with the previous methods implementing protection of content at the level of a domain comprising an access device and a network part (methods described in documents WO 00/62505 A1, EP 1 253 762 A1 and WO 02/47356 A2 cited previously). Thus the method of the invention can be used alone or in a manner complementary (from the portable isolated device) to these existing methods.

Another advantage of the invention is the fact that a content which has been processed so as to be consumed from the portable isolated device does not have to be reprocessed if new rights are acquired in respect of this same content so as to be again consumed from the portable isolated device.

Finally, this protection solution is valid for all the devices of the client domain that are able to connect up momentarily to the portable isolated device. This implies that contents are consumable, with a single overall method of protection, over the whole set of consumption devices that may be in a domain without having specific methods of protection that are dedicated to particular devices of the domain.

According to an embodiment, the access device creates control data packets, referred to as TECM, which are despatched, introduced into the isolated content to the portable isolated device and which contain:
- an encrypted set of data comprising:
   o a key for scrambling the data packets forming the content, and
   o authorization data, and
- information on the encryption allowing the portable isolated device to decrypt the set in a secure manner.

Preferably, the scrambling key contained in the control data packet is moreover protected by an authorization datum.

### BRIEF DESCRIPTION OF THE DRAWINGS

Other characteristics and advantages of the invention will become apparent with the description given herein below by way of nonlimiting example and while referring to the appended figures in which:
- Figure 1, already described, represents an example of a prior art domain 100 of devices,
- Figure 2 diagrammatically represents an embodiment of the invention in a client domain,
- Figure 3 is a diagrammatic description of the method of transferring a content between a client DRM module and a portable isolated device,
- Figure 4 is a diagrammatic representation of the structure of certain data, according to a certain standard, during a transfer between a client DRM module and a portable device.

### DETAILED DESCRIPTION OF THE INVENTION

The invention makes it possible to manage the rights of consumption of the contents acquired by the client over the whole of his domain, the domain possibly including portable isolated devices and remote isolated devices.

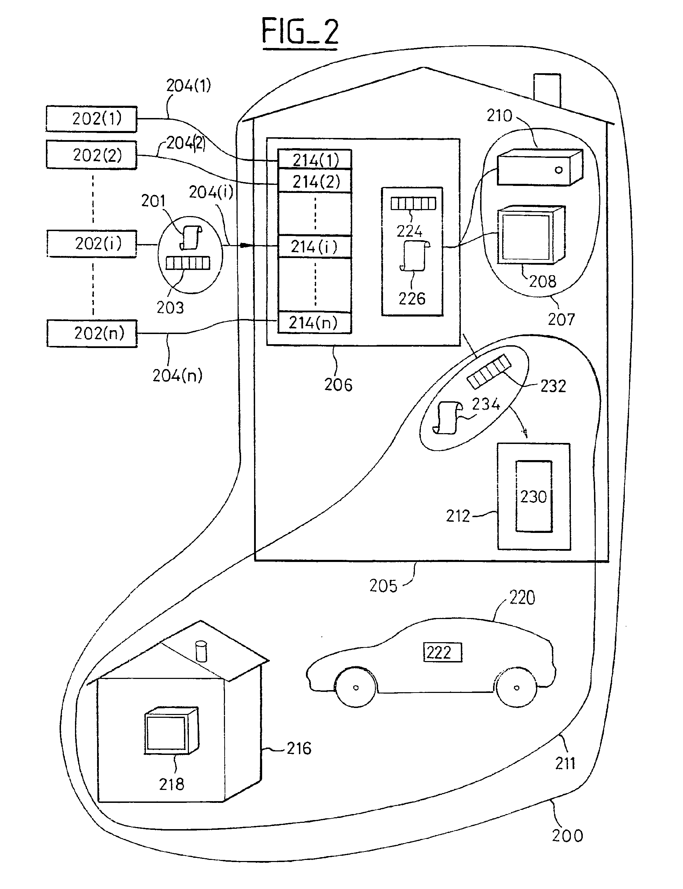

An exemplary embodiment of this invention is represented diagrammatically by Figure 2.

A client has a set, called the domain 200, of electronic devices for processing audio and/or video digital contents.

The client of the domain 200 places an order for a content with associated rights with a provider 202(i), 1 <=i<=n, of contents by virtue of means 214(i), 1<=i<=n, of management of rights, called client DRM modules 214(i), integrated into an access device 206.

The access device 206 then receives by virtue of a network 204(i), 1<=i<=n, such as for example the Internet or a cable network, an audio and/or video provider content 203 and a consumption provider licence 201. The content 203 is provided usually in the form of audio/video data (or other data) packets protected by the provider DRM, for example by being encrypted or scrambled with the aid of a key of the provider.

The provider licence 201 actually contains consumption rights associated with the content 203, data making it possible to access the content (for example, the provider's key used to encrypt data packets of the content) as well as an identifier of the content. The whole is protected, for example by being encrypted, so as not to be able to be accessible other than by the client DRM module 214(i) associated with the provider 202(i) of the content. The licence 201 is received and managed by the client DRM module 214(i).

The content 203 and the licence 201 are then converted into content specific to the domain 200, called personalized content 224, and into a licence specific to the domain 200, called the personalized licence 226, in the access device 206. This entails in particular an adaptation of the data structures to the domain 200. Then, the client can choose to consume the personalized content 224 either directly in the access device 206, or in a network part 207 (devices 210 or 208), as in the prior art.

Specifically, in an embodiment, this personalization of the content, its management and its consumption in the access device 206 or in the network part 207 may be effected in particular according to one of the methods described in documents WO 00/62505 A1, EP 1 253 762 A1 or WO 02/47356 A2 cited previously.

More precisely, according to these exemplary embodiments, the content received 203 is put into the appropriate form (if it is not already in the form required) in the access device 206 so that the audio/video or other data packets are scrambled by control words denoted CW, renewed during each cryptoperiod of the signal (typically every 10 s) to form the personalized content 224. The consumption rights associated with the content 203, which are included in the licence 201, are converted into a format specific to the domain 200. In the exemplary embodiments described in the documents mentioned above, the domain-specific format of the rights contains three possible states:
- "private copying" (that is to say copying of the content is authorized but only for future consumption in the domain 200),
- "unrestricted copying" (copying authorized without condition), or
- "view-only" (that is to say authorization only to consume the content without making any copy thereof for future consumption).

The converted rights are included in messages denoted LECM which also contain the control words CW encrypted by a symmetric key K_{LECM} and the encryption of this key K_{LECM} by a domain-specific key K_{N}. The devices 208, 210 for presenting the content to the user belonging to the domain 200 contain the key K_{N} (stored in a secure memory) and are therefore capable of retrieving K_{LECM}, then the control words CW so as to descramble the data packets of the personalized content 224.

The messages LECM, which correspond in this example to the personalized licence 226, are transmitted together with the data packets of the content 224, while being repeated during each cryptoperiod.

It will be noted that the client can also, by virtue of this invention, consume the personalized content 224 (after possible adaptation, it then becomes an isolated content 232) at the level of an isolated part 211 of the client domain 200 comprising for example a portable isolated device 212 and/or a device 222 in a car 220 and/or a device 218 in a secondary house 216, these latter being called remote isolated devices.

The portable isolated device 212 can contain means of consumption (for example a display screen and a loudspeaker or a pick-up for a headset) in particular if this device 212 is a personal audio and/or video player or not contain them (in this case, this device can in particular be a cryptographic processing and storage device).

For this purpose, the portable isolated device 212 contains a module 230 for managing rights, implementing a method of protection, in particular for the isolated part 211 of the client domain 200, referred to as an isolated method of protection.

The module 230 is generic (that is to say it does not depend on the provider of the content 203), secure (that is to say it is resistant to fraud), and it stores encryption data and consumption authorizations.

The portable isolated device 212 receives, when it connects up to the access device 206 to acquire a content:
- an isolated content 232, suitably adapted for consumption in the device 212 or transmission in a controlled manner from the isolated device 212,
- and an additional licence 234, called an isolated licence, containing the rights of use of the content the client wishes to use from the isolated device 212 in the domain 200, in particular in the isolated part 211, and the data necessary to authorize this use.

An update of the remaining rights in the access device 206 is carried out by deducing from the provider licence 201 the rights transmitted to the isolated device 212 in the licence 234.

For example, if the client has acquired the right to watch a film twice and if he wishes to watch it once in his secondary house 216, the right to watch it once is transmitted to the portable isolated device 212, for subsequent transmission, when required, to the television 218.

In parallel, this transmitted right is then deducted from the rights present in the access device 206 so as thus to leave only the right to watch the film once at the level of the access device 206.

The transmission of the content 232 and of the licence 234 is made secure by virtue of a scrambling/encryption of certain data associated with the content by virtue of the encryption data stored in particular in the module 230.

The rights management module 230 is, for this purpose, included in a smart card or a secure processor, which implements the isolated method of protection and contains in particular the encryption keys stored in a secure manner.

The adaptation of the personalized content 224 and of the personalized licence 226 as an isolated content 232 and as an isolated licence 234 is therefore an important step which must ensure the security of the rights managed from the portable isolated device 212.

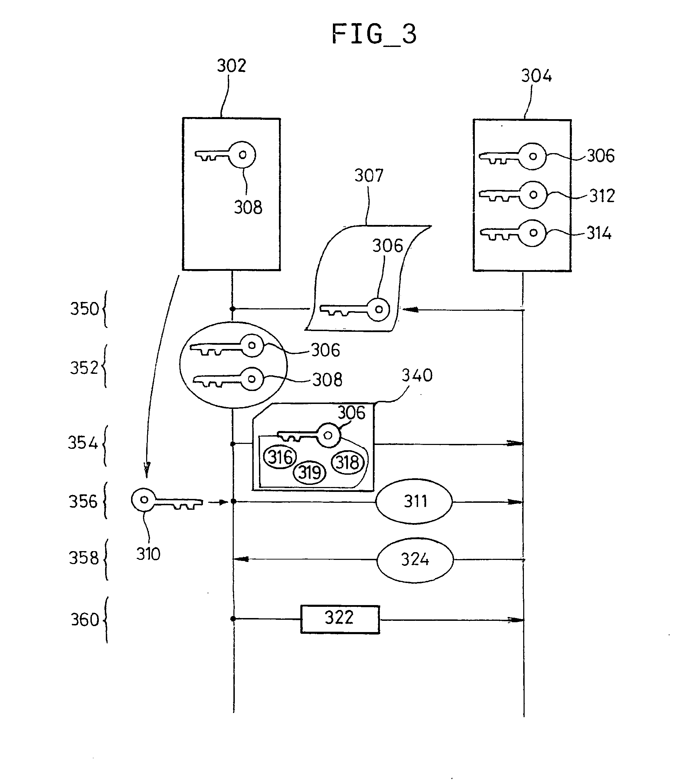

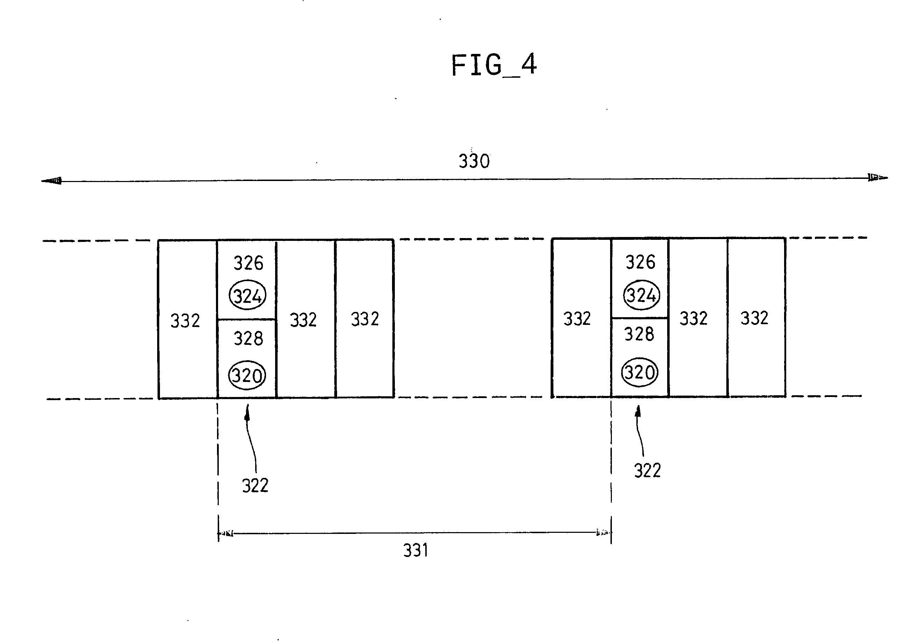

We shall now describe an exemplary embodiment of this adaptation of the personalized content 224 and of the personalized licence 226 as an isolated content 232 and as an isolated licence 234 in conjunction with Figure 3 and Figure 4 (which affords details as to the structure of the data).

According to a preferred embodiment of the invention, the isolated licence 234 is transmitted to the portable isolated device 212 in the form of two "objects":
- on the one hand messages, called TECMs, which correspond to the LECM messages of the personalized licence 226 but in which the symmetric encryption key K_{LECM} is no longer encrypted with the key K_{N} specific to the domain of the user but with a key K_{DP} specific to the portable isolated device 212;
- on the other hand, in the case where the rights associated with the content are of "view-only" type, a message denoted TEMM which contains authorization information making it possible to consume the content subsequently on remote isolated devices 218, 222 of the domain of the user.

Figure 3 illustrates a transfer protocol for transferring an isolated licence between:
- the access device 302, equivalent to the access device 206 of Figure 2,
- and the management module 304 (equivalent to the module 230 of Figure 2) specific to the portable isolated device 212;
when the rights associated with the content to be transmitted are of "view-only" type.

The module 304 has available a certified asymmetric encryption system comprising a public key 306 (KpubTr) and a private key 312 (KprivTr) with a view to identifying itself to the access device 302.
The module 304 also comprises the symmetric encryption key 314 K_{DP} specific to the portable device.

Upon a request to transfer content between the device 302 and the module 304, the following steps are performed:
- step 350: the module 304 despatches a certificate 307 comprising the key 306 KpubTr to the access device 302,
- step 352: the device 302 verifies the key 306 KpubTr (and hence the identity of the portable device 212) by virtue of a public key 308, denoted KpubDRM, which serves to verify the certificate 307 of the portable device 212 (if the identity of the device 212 is not recognized as valid, then the adaptation of the content and its transfer do not take place),
- step 354: if the verification of step 352 is positive, then the device 302 creates a data packet 340 for management of the rights of use of the content, corresponding to the message TEMM, containing in particular the result of the encryption by the key 306 KpubTr of:
   o authorization data 316,
   o of a content identifier 318,
   o and of the rights 319 of use of the content that originate from the licence 201.
   The device 302 next despatches this packet 340 TEMM to the module 304. The authorization data 316 may contain an ephemeral authentication key K and an ephemeral encryption key R, that are generated in a random manner by the access device 302 and such as are defined in the above-cited patent application published under the number WO 02/47356. The rights 319 of use of the content define the conditions of use of the content in the portable device, for example "right to watch the film twice".
- step 356: the access device 302 randomly generates a symmetric key 310 K_{LECM}. This key 310 K_{LECM} is next encrypted by way of the key 306 KpubTr and the result 311 E{KpubTr}(K_{LECM}) is despatched to the module 304,
- step 358: the module 304 decrypts E{KpubTrl}(K_{LECM}) by virtue of the private key 312 KprivTr, reencrypts K_{LECM} by virtue of the symmetric key 314 K_{DP} of the portable device and returns the result 324 E{K_{DP}}(K_{LECM}) of this encryption to the access device 302,
- step 360: the access device 302 creates data packets 322 corresponding to the TECM messages; these packets 322 TECM are introduced into the content 232 representing the structure 330 of the data of the content 232 (Figure 2) in the example of the DVB-MPEG2 standard (the acronym standing for "Digital Video Broadcasting Motion Picture Expert Group"). The packets 322 TECM contain:
   o data 326 comprising the result 324 E{K_{DP}}(K_{LECM}),
   o data 328 comprising the result 320 of the encryption by the symmetric key 310 K_{LECM} of a data set comprising in particular:
      ■ a key for scrambling the data packets forming the content (for example a control word CW),
      ■ authorization data and
      ■ the content identifier 318.

It will be noted that the content identifier 318 may be transmitted as plaintext in the TECM packets which also contain, in a plaintext part, the rights of use of the content converted according to a format specific to the domain 200.

It will be also be noted that, in the case where the authorization data 316 included in the packet 340 TEMM contain an ephemeral authentication key K and an ephemeral encryption key R that are generated in a random manner by the access device 302, these keys are used as follows in the packets 322 TECM: the ephemeral encryption key R is used to "over-encrypt" the key for scrambling the packets forming the content and the ephemeral authentication key K corresponds to the authorization data. Thus, according to this particular example, each packet 322 TECM contains:
E{K_{DP}}(K_{LECM}) | E{K_{LECM}}(E{R}(CW), K, identifier) rights

Each packet 322 TECM is placed in a cryptoperiod 331 (in the conditional access world, a cryptoperiod 331 corresponds to a period during which one and the same scrambling key CW is used to encrypt the content - it generally has a duration of around 10 seconds) with a set of packets 332 transporting parts of the content 232, then the device 302 despatches the packets 322 TECM inserted into the content 330 to the module 304.

Once the content 232 has been transferred to the device 212 (with the packets 322 TECM), the content 232 is reusable should new rights be acquired (for example, acquisition of the rights corresponding to further consumption), so as to be consumed either at the level of the portable isolated device 212, or in any other device able to consume contents managed by the portable isolated device 212.

Following the step of transfer from the access device 206 to the portable device 212 of an isolated content 232 with the associated isolated licence 234 (Figure 2), the consumption of the content 232 may occur:
- either in the portable device 212 itself if this device 212 contains means necessary for effecting this consumption (such as display screen, loudspeakers or pick-up for headphones). The following steps are then implemented:
   o the module 230 checks that the consumption may be effected within the framework of the rights acquired in the licence 234 (if this is not the case, consumption is then denied),
   o the module 230 updates the rights of use of the content in the licence 234, then
   o the module 230 despatches a consumption authorization to the consumption means specific to the portable isolated device 212.
- or at the level of another device of the domain 200 which can connect up temporarily to the device 212, in particular a device of the isolated part 211 of the domain 200, called a content presentation device. The following steps are then implemented:
   o the portable device 212 connects up to one or more devices of the domain 200,
   o the portable device 212 transmits the content 232 to those devices of the domain 200 to which it is connected,
   o a presentation device (for example the television 218 of the secondary residence 216) requests, from the device 212, authorization to consume the content 232 (that is to say in the case of the television 218, the right to display it on its screen),
   o the management module 230 of the portable device 212 then verifies the rights in the licence 234 and, if the request can be accepted, it updates the licence 234 and despatches the authorization and the content to the presentation device.

In a preferred embodiment where the authorization data are those used in the above-cited patent application published under number WO 02/47356 describing a protocol in which only direct consumption of the content without right of copy is authorized ("view only"), the method of consumption of the content at the level of a presentation device 218, 222 (Figure 2) runs as follows.

Firstly, a process similar to that described in conjunction with Figure 3 runs between the presentation device (which plays the role of the management module 304 of Figure 3 and which contains the key K_{N} specific to the domain 200) and the portable isolated device 212 (which plays the role of the access device 302 of Figure 3) on completion of which the device 212 can replace the TECM packets of the content with LECM packets which contain the symmetric key K_{LECM} encrypted with the key K_{N} of the domain (and not with the key K_{DP} of the device 212 as in the TECMs). The LECM packets are then despatched to the presentation device with the content.

The presentation device then decrypts the LECM packets with the aid of its key K_{N}. It thus obtains the ephemeral authentication key K as well as the content scrambling keys CW which are encrypted with the aid of the ephemeral encryption key R. It then generates a random number Ri which it despatches to the portable device 212.

The device 212 calculates authentication data MAC_{K}(Ri) ("MAC" signifying "Message Authentication Code") on the basis of this random number Ri and of the ephemeral authentication key K. Here it should be noted that the device 212 recovers this key K as well as the key R of the TEMM packet (which constitutes a part of the licence 234) by decrypting the authorization data of this TEMM packet with the aid of its private key KprivTr. It then despatches the ephemeral encryption key R and the authentication datum MAC_{K}(Ri) to the presentation device.

The presentation device can then verify the authentication datum received with the aid of the key K and thus verify that the content does indeed come from an authorized source. With the aid of the key R, it can then decrypt the content scrambling keys and descramble the content.

This invention is amenable to numerous variants.

The portable isolated device 212 can also be the access device 206. It is not necessary to the invention to personalize the content 203 and the licence 201 as content 224 and licence 226, the content 203 and the licence 201 may be adapted directly as content 232 and as licence 234.

Also, the symmetric key 314 included in the module 304 of the portable isolated device 212 may be the same as a symmetric key used for the consumption of the content in the part 207 of the network from the access device 206.

The module 230 may be embodied by means other than a smart card for storing and processing encryption information, such as for example a secure processor or a processor associated with anti-fraud software.

The portable device 212 may in particular be a personal audio or video player, a mobile telephone, an electronic device for managing personal data (PDA, standing for "Personal Digital Assistant") or a data storage device equipped with means of cryptographic processing.

## Claims

1. Method for managing consumption of digital contents comprising the steps of:
- receiving from a provider (202(i)) in an access device (206, 302) belonging to a given domain (200) a digital content (203) and a first licence (201) containing consumption rights associated with the content;
- transmitting said content to a portable device (212) together with a second licence (234) containing secondary rights to consume the content from the portable device, said secondary rights being at least part of the consumption rights received in the first license, said second license further containing authorization data in case these authorization data are necessary for the consumption of the content within the domain;
wherein said portable device (212) authorizes or not the consumption of the content within presentation devices (218, 222) of the domain in accordance with the secondary rights received in the second licence.

2. Method according to claim 1, further comprising a step of :
transmitting authorization data (316) from the portable device to a presentation device (218, 222) of the domain in case these authorization data are necessary for the consumption of the content in said presentation device.

3. Method according to one of Claims 1 or 2, **characterized in that** the access device (206, 302) creates control data packets (322), called TECM, which are despatched, introduced into the content sent to the portable device (212) and which contain:
- an encrypted set (320) of data comprising:
o a key for scrambling the data packets forming the content, and
o authorization data, and
- information (324) on the encryption allowing the portable device (212) to decrypt the set (320) in a secure manner.

4. Method according to Claim 3, **characterized in that** the scrambling key contained in the control data packet is moreover protected by an authorization datum.

## Patentansprüche

1. Verfahren für das Management des Verbrauchs digitaler Inhalte, wobei das Verfahren die folgenden Schritte umfasst:
- Empfangen eines digitalen Inhalts (203) und einer ersten Lizenz (201), die dem Inhalt zugeordnete Verbrauchsrechte enthält, von einem Anbieter (202(i)) in einer Zugangsvorrichtung (206, 302), die zu einer gegebenen Domäne (200) gehört;
- Senden des Inhalts zusammen mit einer zweiten Lizenz (234), die sekundäre Rechte für den Verbrauch des Inhalts von der tragbaren Vorrichtung enthält, an eine tragbare Vorrichtung (212), wobei die sekundären Rechte mindestens Teil der in der ersten Lizenz empfangenen Verbrauchsrechte sind und wobei die zweite Lizenz ferner Berechtigungsdaten enthält, falls diese Berechtigungsdaten für den Verbrauch des Inhalts innerhalb der Domäne notwendig sind,
wobei die tragbare Vorrichtung (212) den Verbrauch des Inhalts innerhalb von Darstellungsvorrichtungen (218, 222) der Domäne in Übereinstimmung mit den in der zweiten Lizenz empfangenen sekundären Rechten berechtigt oder nicht berechtigt.

2. Verfahren nach Anspruch 1, das ferner einen folgenden Schritt umfasst:
Senden von Berechtigungsdaten (316) von der tragbaren Vorrichtung zu einer Darstellungsvorrichtung (218, 222) der Domäne, falls diese Berechtigungsdaten für den Verbrauch des Inhalts in der Darstellungsvorrichtung notwenig sind.

3. Verfahren nach einem der Ansprüche 1 oder 2, **dadurch gekennzeichnet, dass** die Zugangsvorrichtung (206, 302) TECM genannte Steuerdatenpakete (322) erzeugt, die abgesendet werden, in den an die tragbare Vorrichtung (212) gesendeten Inhalt eingefügt werden und Folgendes enthalten:
- einen verschlüsselten Satz (320) von Daten, die Folgendes umfassen:
o einen Schlüssel zum Verwürfeln der Datenpakete, die den Inhalt bilden, und
o Berechtigungsdaten, und
- Informationen (324) über die Verschlüsselung, die zulassen, dass die tragbare Vorrichtung (212) den Satz (320) auf sichere Weise entschlüsselt.

4. Verfahren nach Anspruch 3, **dadurch gekennzeichnet, dass** der in dem Steuerpaket enthaltene Verwürfelungsschlüssel darüber hinaus durch eine Berechtigungsdateneinheit geschützt ist.

## Revendications

1. Procédé de gestion de consommation de contenu numérique comprenant les étapes de :
- recevoir d'un fournisseur (202(i)) dans un dispositif d'accès (206, 302) appartenant à un domaine donné (200) un contenu numérique (203) et une première licence (201) contenant des droits de consommation associés au contenu ;
- transmettre ledit contenu à un dispositif portable (212) avec une deuxième licence (234) contenant des droits secondaires pour la consommation du contenu à partir du dispositif portable, lesdits droits secondaires comprenant au moins une partie des droits de consommation reçus dans la première licence, ladite deuxième licence contenant en outre des données d'autorisation dans le cas où ces données d'autorisation sont nécessaires pour la consommation du contenu dans le domaine ;
où ledit dispositif portable (212) autorise ou non la consommation du contenu dans des dispositifs de présentation (218, 222) du domaine en fonction des droits secondaires reçus dans la deuxième licence.

2. Procédé selon la revendication 1, comprenant en outre une étape de :
transmettre des données d'autorisation (316) provenant du dispositif portable à un dispositif de présentation (218, 222) du domaine dans le cas où ces données d'autorisation sont nécessaires pour la consommation du contenu dans ledit dispositif de présentation.

3. Procédé selon une des revendications 1 ou 2, **caractérisé en ce que** le dispositif d'accès (206, 302) crée des paquets de données de commande (322), appelés TECM, qui sont acheminés, introduits dans le contenu envoyé au dispositif portable (212) et qui contiennent :
- un ensemble chiffré (320) de données comprenant:
o une clé de brouillage des paquets de données formant le contenu, et
o des données d'autorisation, et
- des informations (324) sur le chiffrement permettant au dispositif portable (212) de déchiffrer l'ensemble (320) de façon sécurisée.

4. Procédé selon la revendication 3, **caractérisé en ce que** la clé de brouillage contenue dans le paquet de données de commande est en outre protégée par une donnée d'autorisation.
